# EUROPÄISCHE PATENTANMELDUNG

(11) **EP 2 501 020 A2**
(43) Veröffentlichungstag der Anmeldung: **19.09.2012**
(21) Anmeldenummer: 12001486.5
(22) Anmeldetag: 05.03.2012
(51) Int. Cl.: H02K 5/08

(54) **Elektromotorengehäuse mti Flansch**

(30) Priorität: 18.03.2011 DE 102011014309
(71) Anmelder: WILO SE, 44263 Dortmund (DE)
(72) Erfinder: Küster, Bernd, 44379 Dortmund (DE); Lyudmyrsky, Maksym, 45881 Gelsenkirchen (DE); Sura, Hendrik, 44139 Dortmund (DE)
(74) Vertreter: Cohausz Hannig Borkowski Wißgott

(57) **Zusammenfassung**

Die Erfindung betrifft einen Elektromotor mit einem Gehäuse aus Kunststoff, das durch Umspritzen des Motorenstators erstellt ist und das zum Befestigen insbesondere an einem Pumpengehäuse einen angeformten Flansch aufweist, wobei im Flansch des Motorengehäuses ein den Flansch verstärkendes flaches Einlegeteil insbesondere aus Blech einliegt. Ferner betrifft die Erfindung ein Verfahren zum Herstellen eines solchen Elektromotors.

## Beschreibung

Die Erfindung betrifft einen Elektromotor mit einem Gehäuse aus Kunststoff, das durch Umspritzen des Motorenstators erstellt ist und das zum Befestigen insbesondere an einem Pumpengehäuse einen angeformten Flansch aufweist. Ferner betrifft die Erfindung ein Verfahren zum Herstellen eines solchen Elektromotors.

Gehäuse von Elektromotoren weisen häufig an dem Ende, an dem die Welle austritt, einen Flansch auf, mit dem das Gehäuse an der anzutreibenden Vorrichtung insbesondere an einer Pumpe befestigt wird. Ein solcher Flansch ist erheblichen Kräften ausgesetzt und kann reißen, wenn er wie das übrige Gehäuse aus Kunststoff gefertigt ist.

Aufgabe der Erfindung ist es, einen Elektromotor der eingangs genannten Art so zu verbessern, dass ein sicherer Halt des Gehäuses auch dann gegeben ist, wenn der Flansch aus Kunststoff besteht und keine große Kunststoffmaterialmenge verwendet wird.

Diese Aufgabe wird erfindungsgemäß dadurch gelöst, dass im Flansch des Motorengehäuses ein den Flansch verstärkendes flaches Einlegeteil insbesondere aus Blech einliegt.

Damit ist eine sichere mechanische Verstärkung (höhere Steifigkeit, Biegefestigkeit) des Motorflansches gegeben, der durch den Stator-Umspritzungswerkstoff und das zu umhüllende Einlegeteil gebildet wird. Es können hierbei kostengünstigere Umspritzungswerkstoffe verwendet werden (Duroplaste: BMC, EP-Formmassen, Thermoplaste: Polyamide, PBT, andere). Bei Umspritzung mit BMC-Formmassen kann die Schwachstelle dieser Werkstoffgruppe, die unzureichende Bindenahtfestigkeit, durch das Verstärkungsteil vollständig kompensiert werden, so dass die eigentlichen Vorteile einer BMC-Formmasse (schonende Umhüllung des Stators, Verarbeitungsvorteile, kürzere Zykluszeiten, kostengünstiger Werkstoff, ...) genutzt werden können.

Ein besonders sicherer Halt ist dann gegeben, wenn das Einlegeteil am Blechpaket des Stators befestigt insbesondere angeschweißt ist. Hierbei kann aus der Ebene des Einlegeteils mindestens eine Lasche ausgebogen und an der Außenseite des Blechpaktes befestigt insbesondere angeschweißt sein.

Vorzugsweise wird vorgeschlagen, dass das Einlegeteil die Form eines Ringes aufweist, dessen Achse koaxial zur Motorenachse ist. Vorzugsweise umgibt hierbei das ringförmige Einlegeteil das Blechpaket vorzugsweise an einem Blechpaketende. Vorzugsweise wird hierzu auch vorgeschlagen, dass das Einlegeteil mit einem ringförmigen Zwischenspalt das Blechpaket umgibt und in den Innenraum des Einlegeteils Vorsprünge insbesondere Zungen vorstehen, die den Zwischenspalt überbrücken.

Eine exakte Lage des Einlegeteils gegenüber dem Stator wird dann erreicht, wenn in den Innenraum des Einlegeteils mindestens ein Vorsprung insbesondere eine Zunge oder Lasche vorsteht, die in eine Ausnehmung insbesondere Nut an der Außenseite des Blechpakets hineinreicht.

Vorzugsweise wird vorgeschlagen, dass der Kunststoff des Flansches das Einlegeteil vollständig umgibt. Alternativ kann aber auch das Einlegeteil aus dem Kunststoff des Flansches seitlich vorragen.

Eine weitere Erhöhung der Stabilität wird erreicht, wenn der Außenrand des ringförmigen Einlegeteils vorspringende Bereiche aufweist, die die Bohrungen in den Ecken des Flansches teilweise oder vollständig umgreifen. Vorzugsweise besteht das Einlegeteil aus Metall insbesondere aus Stahl, einem Statorblech oder einem faserverstärkten Kunststoff.

Von Vorteil ist auch, wenn das Einlegeteil die Innenwand der Bohrung unterbricht, um mit dem in der Bohrung einliegenden, metallenen Befestigungsteil wie einer Schraube insbesondere zur Erdung zu kontaktieren.

Ein vorteilhaftes Verfahren zum Herstellen eines Elektromotorengehäuses mit angeformtem Flansch und mit Einlegeteil im Flansch ist dann gegeben, wenn zuerst das Einlegeteil an das Blechpaket des Stators befestigt insbesondere angeschweißt oder angeklebt wird und danach der Stator mit dem Einlegeteil mit Kunststoff umspritzt wird. Hierbei kann das Einlegeteil vorab erwärmt und im erwärmten Zustand mit dem Stator in ein Umspritzungswerkzeug gelegt werden, um den Umspritzungsprozess zu verbessern und das Aushärten zu beschleunigen.

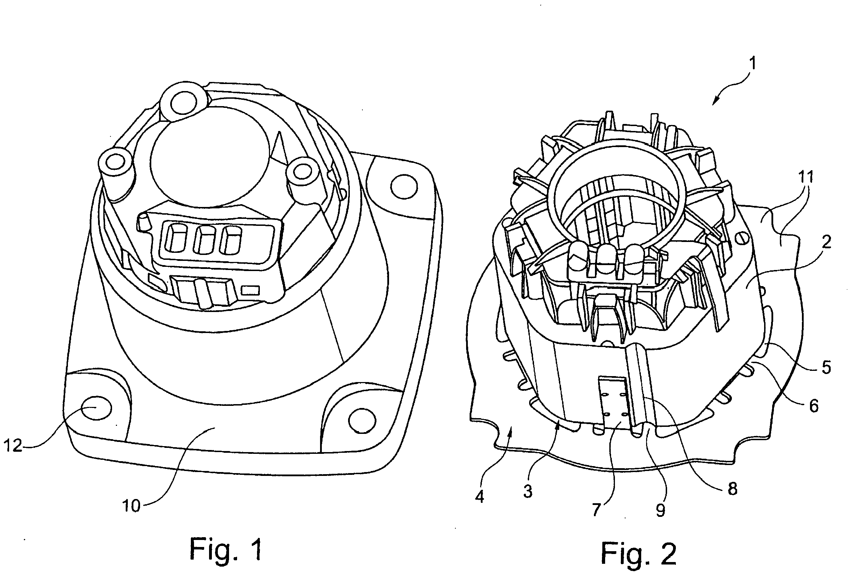

Ein Ausführungsbeispiel der Erfindung ist in den Zeichnungen perspektivisch dargestellt und wird im Folgenden näher beschrieben. Es zeigen
- Fig. 1: eine Außenansicht des Motorengehäuses aus Kunststoff und
- Fig. 2: den Stator des Elektromotors mit einem Blecheinlegeteil im noch nicht umspritzten Zustand.

Ein Elektromotor weist einen Stator 1 auf mit einem Blechpaket 2 insbesondere als Rückschlussring. Auf einer Stirnseite des Blechpakets 2 befinden sich die Spulenanschlüsse und auf der gegenüberliegenden zweiten Stirnseite 3, die der vom Motor angetriebenen Pumpe zugewandt ist, ist ein ringförmiges Einlegeteil 4 koaxial befestigt insbesondere angeschweißt oder angeklebt, das aus Metall insbesondere Stahl, einem Statorblech oder einem faserverstärkten Kunststoff besteht. Das Einlegeteil 4 umgibt koaxial das Blechpaket 2 am untersten Ende des Blechpakets, wobei der Innenraum des Einlegeteils 4 im Durchmesser so groß gewählt ist, dass ein ringförmiger Zwischenspalt 5 zwischen dem unteren Rand des Blechpakets und dem Innenrand des Einlegeteils 4 besteht. Hierbei sind am Innenrand des Einlegeteils 4 zungenförmige Vorsprünge 6 angeformt, die die Außenseite des Blechpakets 2 im Bereich des untersten Blechs berühren.

Ein sicherer Halt des Einlegeteils 4 an der Außenseite des Blechpakets 2 ist dadurch gegeben, dass am Innenrand des Einlegeteils 4 eine Befestigungslasche 7 radial vorspringt und nach oben parallel zur Außenseite des Blechpakets abgebogen ist und damit achsparallel anliegt. Vorzugsweise bildet das Einlegeteil 4 zwei, drei oder vier solcher Laschen 7, die an der Außenseite des Blechpakets befestigt insbesondere angeschweißt sind.

An der Außenseite des Blechpakets 2 befindet sich zumindest eine Nut oder rinnenförmige achsparallele Ausnehmung 8, in die ein zungenförmiger Vorsprung 9 oder Lasche des Randes des Einlegeteils 4 hineinragt, so dass eine definierte sichere Lage des Einlegeteils 4 gegenüber dem Blechpaket 2 gegeben ist.

Ein solcher Stator 1 mit an einem Ende koaxial befestigtem ringförmigen Einlegeteil 4 wird in ein Umspritzungswerkzeug gelegt und dort von Kunststoff umspritzt, wobei der das Motorengehäuse bildende Kunststoff gleichzeitig den Motorenflansch 10 bildet, der das Einlegeteil 4 allseitig umgibt, so dass das Einlegeteil 4 den Flansch 10 verstärkt.

Vorzugsweise wird das Einlegeteil 4 vor dem Umspritzen vorgewärmt. Dies wirkt unterstützend für den Umspritzungsprozess bezüglich der schnelleren Aushärtung einer ggf. eher dickwandig ausgeführten Flanschgeometrie. So wirkt es bei Verwendung von Duroplasten als Umspritzungsmaterial Zykluszeitverkürzend.

Im Ausführungsbeispiel weist der Außenrand des ringförmigen Einlegeteils 4 vorspringende Bereiche 11 auf, die sich an den vier Ecken des Flansches 10 befinden. Hierbei sind pro Ecke jeweils zwei Bereiche 11 als Paar angeordnet, um die Bohrungen 12 in den Ecken des Einlegeteils 4 mehr oder weniger zu umgreifen. Der Bereich zwischen den vorspringenden Bereichen 11 ist hierbei teilkreisförmig geformt mit demselben Radius wie der der Bohrungen 12, so dass in den Bohrungen 12 einliegende Schrauben von den Bereichen 11 umfasst werden. Statt der vorspringenden Bereiche 11 können an den vier Ecken des Einlegeteils 4 aber auch Bohrungen im Einlegeteil vorhanden sein, die mit den Bohrungen 12 des Kunststoffflansches 10 fluchten. Hierdurch wird der äußere Kunststoffrand der Bohrung 12 gestärkt, so dass eine Kunststoff-Bindenaht in diesem Kunststoffrand als Schwachstelle gestärkt ist.

Das metallene Einlegeteil 4 zeigt sich in einem weiteren Ausführungsbeispiel im Innenmantel der Bohrung 12, so dass das Einlegeteil die in der Bohrung einliegende Befestigungsschraube kontaktiert. Hierdurch kann eine Erdung zum metallenen insbesondere Guss-Pumpengehäuse hergestellt werden.

Das Verstärkungs"blech" muss nicht notwendigerweise aus Metall sein; von Vorteil ist auch ein Verstärkungshalbzeug aus Composite, d. h. aus faserverstärktem Kunststoff, sog. FVK-Material. Diese Verstärkungsplatten lassen sich mit heutiger Technik bereits in eine derart geeignete Form bringen, die Blech-Tiefziehprozessen zumindest ähnlich sind, Auch kann das FVK-Halbzeug durch Zuschnitt Metallblech-ähnlich gestaltet werden. Die Halbzeuge werden auch als sog. "Organo-Bleche" bezeichnet. Ein solches Organo-Blech wird am Stator in geeigneter Art und Weise befestigt und dann identisch zum metallischen Blech mit dem kostengünstigen Umspritzungsmaterial umspritzt. Der Vorteil eines Verstärkungseinlegers aus Organo-Blech ist u. a., dass die mechanischen Eigenschaften (Steifigkeit, Festigkeit) noch zielgerichteter eingestellt werden können.

## Patentansprüche

1. Elektromotor mit einem Gehäuse aus Kunststoff, das durch Umspritzen des Motorenstators (1) erstellt ist und das zum Befestigen insbesondere an einem Pumpengehäuse einen angeformten Flansch (10) aufweist, **dadurch gekennzeichnet, dass** im Flansch (10) des Motorengehäuses ein den Flansch verstärkendes flaches Einlegeteil (4) insbesondere aus Blech einliegt.

2. Elektromotor nach Anspruch 1, **dadurch gekennzeichnet, dass** die Seitenflächen des Einlegeteils (4) mit der Motorenachse einen rechten Winkel bilden.

3. Elektromotor nach Anspruch 1 oder 2, **dadurch gekennzeichnet, dass** das Einlegeteil (4) am Blechpaket (2) des Stators (1) befestigt insbesondere angeschweißt ist.

4. Elektromotor nach Anspruch 3, **dadurch gekennzeichnet, dass** aus der Ebene des Einlegeteils (4) mindestens eine Lasche (7) ausgebogen und an der Außenseite des Blechpaktes (2) befestigt insbesondere angeschweißt ist.

5. Elektromotor nach einem der vorherigen Ansprüche, **dadurch gekennzeichnet, dass** das Einlegeteil (4) die Form eines Ringes aufweist, dessen Achse koaxial zur Motorenachse ist.

6. Elektromotor nach Anspruch 5, **dadurch gekennzeichnet, dass** das ringförmige Einlegeteil (4) das Blechpaket (2) vorzugsweise an einem Blechpaketende umgibt.

7. Elektromotor nach Anspruch 5 oder 6, **dadurch gekennzeichnet, dass** das Einlegeteil (4) mit einem ringförmigen Zwischenspalt (5) das Blechpaket (2) umgibt und in den Innenraum des Einlegeteils (4) Vorsprünge (6) insbesondere Zungen vorstehen, die den Zwischenspalt (5) überbrücken.

8. Elektromotor nach einem der vorherigen Ansprüche, **dadurch gekennzeichnet, dass** in den Innenraum des Einlegeteils (4) mindestens ein Vorsprung insbesondere eine Zunge (9) oder Lasche vorsteht, die in eine Ausnehmung (9) insbesondere Nut an der Außenseite des Blechpakets (2) hineinreicht.

9. Elektromotor nach einem der vorherigen Ansprüche, **dadurch gekennzeichnet, dass** der Kunststoff des Flansches (10) das Einlegeteil (4) vollständig umgibt.

10. Elektromotor nach einem der Ansprüche 1 bis 8, **dadurch gekennzeichnet, dass** aus dem Kunststoff des Flansches (10) das Einlegeteil (4) seitlich vorragt.

11. Elektromotor nach einem der vorherigen Ansprüche, **dadurch gekennzeichnet, dass** der Außenrand des ringförmigen Einlegeteils (4) vorspringende Bereiche (11) aufweist, die die Bohrungen (12) in den Ecken des Flansches (10) teilweise oder vollständig umgreifen.

12. Elektromotor nach einem der vorherigen Ansprüche, **dadurch gekennzeichnet, dass** das Einlegeteil (4) aus Metall insbesondere Stahl oder faserverstärktem Kunststoff besteht.

13. Elektromotor nach einem der vorherigen Ansprüche, **dadurch gekennzeichnet, dass** das Einlegeteil (4) die Innenwand der Bohrung (12) unterbricht, um mit dem in der Bohrung einliegenden, metallenen Befestigungsteil wie einer Schraube insbesondere zur Erdung zu kontaktieren.

14. Verfahren zum Herstellen eines Elektromotors nach einem der vorherigen Ansprüche, **dadurch gekennzeichnet, dass** zuerst das Einlegeteil (4) an das Blechpaket (2) des Stators (1) befestigt insbesondere angeschweißt oder angeklebt wird und danach der Stator mit dem Einlegeteil (4) mit Kunststoff umspritzt wird.

15. Verfahren nach Anspruch 14, **dadurch gekennzeichnet, dass** das Einlegeteil (4) vorab erwärmt und im erwärmten Zustand mit dem Stator (1) in ein Umspritzungswerkzeug gelegt wird.
